# EUROPEAN PATENT SPECIFICATION

(11) **EP 1 634 023 B1**
(45) Date of publication and mention of the grant of the patent: **30.11.2011**
(21) Application number: 03817171.6
(22) Date of filing: 13.08.2003
(51) Int. Cl.: F17C 9/04

(54) **LIQUEFIED NATURAL GAS REGASIFICATION CONFIGURATION AND METHOD**
KONFIGURATION UND VERFAHREN ZUR WIEDERVERDAMPFUNG VERFLÜSSIGTER ERDGASE
CONFIGURATION ET PROCEDE DE REGASEIFICATION DE GAZ NATUREL LIQUEFIE

(30) Priority: 05.06.2003 US 476770 P
(43) Date of publication of application: 15.03.2006
(73) Proprietor: FLUOR CORPORATION, Aliso Viejo, CA 92698 (US)
(72) Inventor: MAK, John Fluor Corporation, Aliso Viejo, CA 92656 (US); GRAHAM, Curt Fluor Corporation, Aliso Viejo, CA 92656 (US); SCHULTE, Dave Fluor Corporation, Aliso Viejo, CA 92656 (US)
(74) Representative: Dr. Graf & Partner AG
(86) International application number: PCT/US2003/025372
(87) International publication number: WO 2004/109206

(56) References cited:
- EP-A1- 0 470 532
- DE-A1- 3 836 061
- FR-A- 1 295 046
- GB-A- 946 640
- GB-A- 1 008 394
- US-A- 3 405 530
- US-A- 3 837 172
- US-A- 3 849 096
- US-A- 4 121 917
- US-A- 4 388 092
- US-A- 4 456 459
- US-A- 5 114 451
- US-A- 5 114 451
- US-A- 5 457 951
- US-A- 6 125 653
- US-A1- 2002 174 679
- US-A1- 2003 005 697
- US-B1- 6 374 591
- US-B1- 6 564 579

## Description

### Field of the Invention

The field of the invention is gas processing, especially as it relates to regasification of liquefied natural gas for recovery or removal of C2, C3, and/or higher components.

### Background of The Invention

As the demand for natural gas in the United States has risen sharply in recent years, the market price of natural gas has become increasingly volatile. Consequently, there is a renewed interest in import of liquefied natural gas (LNG) as an alternative source for natural gas. However, most import LNG has a higher heating value and is richer in heavier hydrocarbons than is allowed by typical North American natural gas pipeline specifications. For example, while some countries generally accept the use of richer and high heating value LNG, the requirements for the North American market are driven by ecological and environmental concerns and may further depend on the particular use of the LNG.

Most American pipeline operators require relatively lean gas for transportation, with some states even imposing constraints on the amount of non-methane contents. Furthermore, in some mid-west regions, natural gas gross heating value is limited to ranges between 960 and 1050 Btu/scf, while in California, the acceptable gross heating value is between 970 and 1150 Btu/scf. Most LNG sources (*e.g*., from the Middle East regions or South East Asia) are generally higher in heating values and contain more C₂ - C₆ components than the North America requirements. Table 1 shows the current California pipeline gas standards and typical ranges of import LNG compositions

**Table 1**

| **Component** | **California Standards** | **Typical LNG Import** |
|---|---|---|
| C₁ | 88% minimum | 86 to 95% |
| C₂ | 6% maximum | 4 to 14% |
| C₃-C₅ | 3% maximum | 3 to 7% |
| C₆+ | 0.2% maximum | 0.5 to 1% |
| N₂+CO₂ | 1.4 to 3.5% | 0.1 to 1% |
| Gross Heating Value, Btu/SCF | 970-1150 | 1050 -1200 |

As environmental regulations become more stringent, tighter control on LNG compositions than the current specifications are expected in the North American markets requiring new processes that can economically remove the C₂+ components from LNG. Moreover, such processes should advantageously provide a plant with sufficient flexibility to handle a wide range of LNG allowing importers to buy LNG from various low cost markets instead of being limited, to those sources that meet the North America specifications.

Conventional processes for regasifying rich LNG (*e.g.,* LNG from Indonesia is typically at 1200 to 1300 Btu/SCF) involve heating the LNG in fuel-fired heaters or with seawater heaters, and then diluting the vaporized LNG with nitrogen or a lean gas to meet the heating value specification. However, either heating process is undesirable as fuel gas heaters generate emissions and CO₂ pollutants, and seawater heaters require costly seawater systems and also negatively impact the ocean environment. Furthermore, dilution with nitrogen to control the natural gas heating value is typically uneconomical as it generally requires a nitrogen source (*e.g*., an air separation plant) that is relatively costly to operate. While the dilution methods can produce "on-spec" heating values, the effects on LNG compositions are relatively minor, and the final composition (especially with respect to C₂ and C₃+ components) may still be unacceptable for the environmental standards of the North America or other environmental sensitive markets. Consequently, a LNG stripping process or other gas fractionation step must be employed, which generally necessitates vaporizing the LNG in a demethanizer using a reboiler, with the demethanizer overhead re-condensed to a liquid form and then pumped and vaporized in the conventional vaporizers, which further increases the capital and operating costs. An exemplary regasification process and configuration is described in U.S. Pat. No. 6,564,579 to McCartney.

DE 38 36 061 is the closest prior art, on which the preamble to claim 1 is based.

Therefore, while numerous processes and configurations for LNG regasification are known in the art, all of almost all of them suffer from one or more disadvantages. Most notably, many of the currently known processes are energy inefficient, and inflexible in meeting the heating values and composition requirements. Thus, there is still a need to provide improved configurations and methods for gas processing in LNG regasification.

### Summary of the Invention

The present invention is directed to configurations and methods of processing LNG in a plant in which a heat source (*e.g*., integral with or thermally coupled to the plant) heats the LNG that is then expanded to produce work. Particularly preferred heat sources include waste heat from combined cycle power plants. In still further preferred plants, the LNG processing employs a demethanizer and deethanizer, wherein the demethanizer removes C₂+ components from the LNG using the expanded vapor as a stripping medium, and wherein the cooling duty of the deethanizer overhead condenser is provided by the refrigeration content in the LNG before the LNG is heated. Furthermore, the refrigeration content in LNG is utilized to increase the power generation efficiency of the combined cycle power plant by providing cooling to the gas turbine combustion air (Brayton Cycle) and in the surface condenser in the steam turbine (Rankine Cycle).

Therefore, in one aspect of the inventive subject matter, contemplated plants will comprise a heat source (*e.g*., combined cycle power plant) that heats a first portion of a liquefied natural gas, and an expander in which the first portion of the heated liquefied natural gas is expanded to produce work. It is further preferred that at least a portion of the expanded gas is fed into a demethanizer as a stripping gas to produce a lean gas (ethane partially or totally depleted) and a demethanized bottom product, wherein the lean gas may be recompressed using at least part of the work provided by the expander. The demethanized bottom product may then be fed to a deethanizer that produces an ethane product and a liquefied petroleum gas product, wherein at least in some configurations the ethane product is employed as a fuel in the combined cycle power plant.

In further preferred aspects of such plants, it is contemplated that at least a portion of the reflux condenser duty of the deethanizer is provided by the refrigeration content of a portion of the liquefied natural gas before the heat source heats the liquefied natural gas, and/or that a second portion of the liquefied natural gas is separated in a demethanizer into a lean gas and a demethanized bottom product (the second portion and the first portion preferably have a ratio of between about 0.4 to 0.7).

Thus, in another aspect of the inventive subject matter, contemplated plants will comprise a liquid natural gas feed that is split in a first portion and a second portion, wherein the first portion is heated and expanded before entering a demethanizer, and wherein the second portion is used as reflux for the demethanizer. It is generally preferred that the first portion is expanded in an expander to produce work (*e.g*., electric power), with the expanded vapor forming a stripping gas for the demethanizer in producing a lean gas that is compressed to pipeline pressure using the work provided by the expander. Additionally, contemplated plants may include a deethanizer, wherein the first portion of the LNG provides reflux condenser duty for the deethanizer before the first portion is heated and expanded. In suitable plants, the demethanizer produces a bottom product that is fed to the deethanizer, wherein the deethanizer produces a liquefied petroleum gas (C₃+) product and an ethane product, which may then be sold for petrochemical feedstock or combusted as a turbine fuel in a combined cycle power plant. Where appropriate (*e.g*., to reduce safety concerns), heating of the first portion is provided by a heat transfer fluid (*e.g*., a glycol water mixture) that transfers heat from the gas turbine combustion air, the steam turbine discharge, the heat recovery unit, and/or the flue gas stream. The integration to a power plant is particularly advantageous as the use of LNG improves the power generation efficiency of the combined cycle, that is, the gas turbine power cycle (Brayton Cycle) and the steam turbine cycle (Rankine Cycle).

In a further aspect of the inventive subject matter, a plant may include a regasification unit operationally coupled to a combined cycle power unit, wherein liquefied natural gas is heated by waste heat from the combined cycle power unit, and wherein a lean natural gas produced from the heated liquefied natural gas is compressed using power produced by expansion of the heated liquefied natural gas. It is especially contemplated that in such plants the regasification unit provides a liquefied petroleum gas (C₃+) product and an ethane combustion fuel to the combined cycle power unit, wherein ethane is produced from the liquefied natural gas. It is further preferred that a demethanizer produces the lean natural gas, and optionally further provides a demethanized bottom (C₂+) product to a deethanizer, wherein the deethanizer produces a liquefied petroleum gas (C₃+) product and an ethane product as petrochemical feedstock or the combustion fuel. In such plants, it is contemplated that integration to a power plant increases the overall power generation efficiency of the combined cycle power plant.

Various objects, features, aspects and advantages of the present invention will become more apparent from the following detailed description of preferred embodiments of the invention, along with the accompanying drawing.

### Brief Description of The Drawing

Figure 1 is a schematic view of one exemplary plant according to the inventive subject matter with direct integration of a combined cycle power plant.
Figure 2 is a schematic view of another exemplary plant according to the inventive subject matter with indirect integration of a combined cycle power plant via a glycol heat transfer medium.

### Detailed Description

The inventors discovered that LNG can be processed in a manner that takes advantage of the relatively large refrigeration content in the LNG. More specifically, the inventors discovered that an LNG stream can be pumped to a desired pressure and split into a first and second portion, wherein the first portion may be employed as reflux stream in a demethanizer, and wherein the refrigeration content and energy is extracted from the second portion in one or more steps.

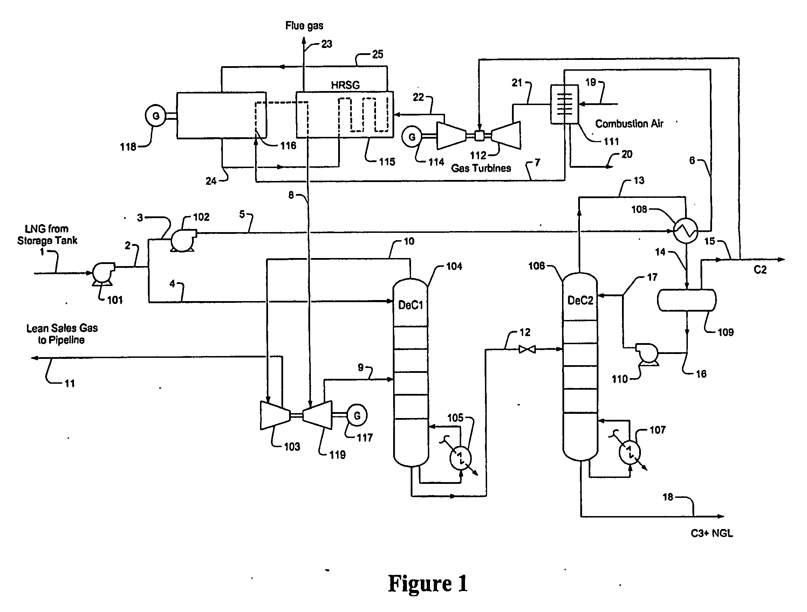

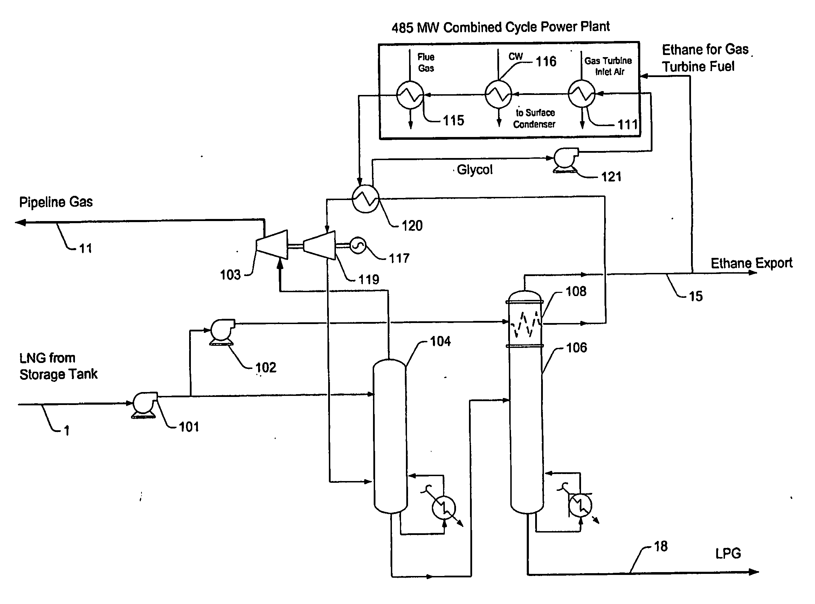

In one preferred aspect of the inventive subject matter as depicted in **Figure 1**, LNG is pumped and split into two portions. The first portion is sent to a demethanizer as a cold reflux, while the second portion is utilized for power generation. Here, the second portion is heated by (a) providing condensing reflux duty in a deethanizer, (b) cooling of the combustion air to a gas turbine, and (c) cooling of the surface condenser in a steam cycle, and (d) further heating with waste heat from an HRSG (Heat Recovery Steam Generator) in a combined cycle power plant.

More specifically, in the exemplary configuration of Figure 1, The LNG flow rate to the plant is equivalent to 1.2 BSCFD of natural gas with a typical gas composition shown in Table 1 above. LNG stream 1 from storage (or other suitable source) is at a pressure of about 15 psia and a temperature of typically about -260°F to -255°F. Stream 1 is pumped by LNG pump 101 to a suitable pressure, typically about 400 to 500 psig to form pressurized LNG stream 2, as needed to enter the demethanizer. Pressurized LNG stream 2 is then split into stream 4 and stream 3, preferably at a ratio (*i.e*., flow rate of stream 4 divided by flow rate of stream 3) between 0.4 to 0.7. A higher flow ratio on stream 4 will increase the reflux to the demethanizer 104 and increase the removal of the C₂+ components. For example for a split ratio of 0.5 to 0.6, the removal levels are about 90% for ethane and about 99% for propane. When the split ratio is lowered to 0.4 to 0.5, the removal levels are correspondingly lowered to 10% to 50% for ethane. The changes in reflux ratios will typically have only minor impact on the propane recovery that can be maintained at the 90% or higher levels, and is desirable as the liquefied petroleum gas is a more valuable product. Thus, it should be recognized that by varying the split ratio, the quantity of C₂+ components in the sales gas can be controlled to meet specific market requirements. While split ratios between 0.4 and 0.7 are generally preferred, suitable split ratios also include 0.3 to 0.39, and 0.71 to 0.9.

Stream 3 is further pumped in pump 102 to about 1500 psig to 2500 psig forming stream 5, and heated in several steps. First, stream 5 is heated to stream 6 at about -200°F in a deethanizer overhead condenser 108 of the deethanizer system. Stream 6 is further heated in exchanger 111 by cooling the combustion air 19 that is cooled from ambient temperature to about 30°F to 60°F (stream 21) before the combustion air is fed to a gas turbine 112. Water condensed from the combustion air is removed as stream 20 from the exchanger 111. The cold combustion air, being denser, increases the power generation efficiency and capacity of the gas turbine 112 and electric generator 114. Of course, it should be recognized that the selection of an optimum temperature of stream 21 depends on the gas turbine performance. Theoretically, the gas turbine inlet air can be further cooled and more power generation can be gained. However, there is a maximum power output limit for decreasing inlet air temperature, which is a function of the gas turbine performance characteristics and mechanical limitations.

High pressure natural gas stream 7 from exchanger 111 is further utilized to cool the cooling water to the surface condenser 116 in the steam cycle. Using LNG as a low temperature heat sink greatly improves the power generation efficiency of the Rankine cycle employed in the steam turbine cycle. The high pressure natural gas is further heated to 125°F to 300°F with waste heat from the flue gas stream 22/23 from HRSG (Heat Recovery Steam Generator). The power produced by the steam turbines is used to generate electric power with generator 118. Boiler feed water stream 24, produced from the steam condenser is pumped, vaporized and superheated to stream 25 in HRSG 115 before returning to the steam cycle power plant. The high pressure heated natural gas 8 at 125°F to 300°F, and 1450 psig to 2450 psig is then expanded in expander 119. A portion of the expander power is used to drive the residue gas compressor 103, and excess power is used to generate electric power in generator 117. Depending on market conditions and other factors, ethane offgas stream 15 and optionally the C₃+ NGL stream 18 can be used as a fuel gas for gas turbine 112.

The expander outlet stream 9 at 40°F to -40°F is fed into demethanzier 104 operating at 400 psig to 500 psig. It should be especially noted that stream 9 supplies at least a portion, if not all, of the reboiler heat required by the demethanizer. The reflux duty for demethanzier 104 is provided by stream 4. It should be especially noted that such reflux/stripping configurations are self-contained and typically do not require any fuel consumption. If required, a bottom reboiler 105 can be used to supplement the heating requirement in which waste heat from the combined cycle facility can be used. Demethanizer overhead 10 is then recompressed by compressor 103 to form stream 11, typically at pipeline pressure.

The bottom product stream 12 from demethanizer 104 is letdown in pressure and sent to deethanizer 106. The deethanizer overhead stream 13 is cooled in an overhead condenser 108 using the LNG stream 5 as a coolant. The chilled overhead stream 14 is separated in a reflux drum 109, and the liquid stream 16 is pumped by reflux pump 110 to stream 17 that is routed to the top of the deethanizer as reflux. Reboiler duty of the deethanizer is supplied by reboiler 107 using waste heat from the combined cycle plant. The deethanizer produces an ethane stream 15 that may be used as feedstock to a petrochemical plant or a fuel gas for the combined cycle and further produces a bottom C₃+ NGL stream 18', which can be sold as a liquid product.

Alternatively, heat integration may be also be achieved by thermally coupling a heat source to the LNG processing as depicted in the exemplary plant configuration of **Figure 2**. Here, the portion of the LNG that is heated and performs work is heated using a heat transfer (*e.g*., glycol-based heat transfer fluid) that provides heat from the combined cycle power plant to the LNG processing unit

Here, and similar to the process of Figure 1 above, LNG stream 1 is provided from storage or other source at -255°F and pressurized by LNG pump 101 to about 450 to 550 psig, the pressure needed to enter the demethanizer 104. About 50% (or 5,000 GPM) of the pressurized LNG is split off and sent to the demethanizer 104 as column reflux. The remaining 50% are pumped by the LNG power cycle pump 102 to about 2,000 psig, heated in the integral deethanizer reflux condenser 108, and further heated in exchanger 120 before expansion in expander 119 for power generation using generator 117. The integral exchanger 108 also provides the deethanizer reflux in the form of an internal stream and has eliminated the reflux drum 109 and reflux pump 110 of Figure 1. Expander inlet pressure greater than 2,000 psig may be used to increase power output and efficiency, but there is an economic trade-off between higher power revenues and the higher equipment costs - higher expander pressure can only be justified where electric power can be sold at a premium.

The demethanizer overhead is then compressed to pipeline pressure by compressor 103 using power from the expander 119. Deethanizer 106 receives bottom product of demethanizer 104 and produces an ethane overhead product 15 and a LPG product 18, which may be sold, used in another portion of the plant (*e.g*., as gas turbine fuel in a combined cycle power plant), or employed as synthesis material. The combined cycle power plant in this exemplary configuration includes exchangers 111,115, and 116 as in Figure 1, and the heat transfer medium is pumped by pump 121.

Thus, the high pressure LNG from 102 is heated in two heat exchangers, 108 and 120. The reflux condenser 108 in the deethanizer overhead increases the LNG temperature from - 255°F to about -190 °F. LNG is utilized to satisfy the refrigeration requirement in the fractionation process, therefore eliminating the costly refrigeration compressor equipment and the power consumption. LNG is further heated in a glycol exchanger 120 to about 300°F using waste heat from the power plant. A glycol/water heat mixture, or other similar heat transfer fluids, is preferably used as the heat transfer medium between the power block and the LNG regasification facility. The indirect heat exchange process advantageously isolates LNG from direct heat exchange with the power block, avoiding potential risk and hazards associated with LNG from equipment failures.

Another advantage of the chilled glycol system includes the reduction of cooling water supply temperature to the surface condensers, and with a lower temperature, the efficiency of the Rankine cycle employed in the steam turbine power plant can be increased. This will generally result in lowering the temperature and pressure of the surface condensers, and hence a lower back pressure on the condensing steam turbine. Typically, reducing the back pressure on the condensing steam turbine by 1 psi will increase the steam turbine output by about 6%. It should be recognized that the glycol flow configuration shown in Figure 2 is only schematic and the actual glycol circuits are more complex and involve multiple flow circuits as required for optimum heat integration between the two facilities.

In the exemplary configuration of Figure 2, about 37,000 HP is generated when the high-pressure high-temperature natural gas is expanded to about 400 to 500 psig. About 60% of the power is used to drive the residue gas compressor 103 that is required to compress the demethanizer overhead from 440 to 490 psig, to about 1100 psig (typical pipeline pressure). The excess 15,000 HP can be used to generate power for internal use and/or for export.

Thus, suitable heat sources especially include gas turbine combustion air, cooling water to the surface condenser, and/or flue gas from a gas turbine. However, numerous other heat sources are also contemplated, and it should be appreciated that units other than a combined cycle plant are also considered appropriate as a heat source. For example, suitable alternative heat sources include numerous cryogenic processes (*e.g*., air separation plants) in which the LNG cools the air or other gas, processes providing flue gas (*e.g*., combustion turbines, reformer flue gases, etc.), and other processes acting as a cold sink (*e.g*., carbon dioxide liquid production plants, desalination plants, or food freezing facilities). However, it is generally preferred that suitable plants include LNG regasification facilities and LNG receiving terminals. Consequently, and depending on the particular heat source, it should be recognized that the energy needed for regasification of the LNG may be entirely, or only partially provided by contemplated heat sources. Where the heat source provides insufficient quantities of heat to completely gasify the LNG, it should be recognized that supplemental heat may be provided. Suitable supplemental heat sources include waste heat from the steam turbine discharge, condensation duty from the flue gas, ambient heating with air (by providing air conditioning to buildings), with seawater or fuel gas. Consequently, it should be appreciated that contemplated configurations and processes may be used to retrofit existing regasification plants to improve power generation efficiencies and flexibility, or may be used in new installations.

Therefore, it should be recognized that numerous advantages may be achieved using configurations according to the inventive subject matter. For example, contemplated configurations provide a highly efficient LNG power generation cycle that can be coupled with a conventional combined cycle power plant. Furthermore, in most configurations no external heating is needed, and thus eliminates the heretofore present need for fuel gas or seawater to heat the LNG in conventional LNG regasification. In yet a further particularly preferred aspect, it should be appreciated that contemplated configurations (by virtue of modifying the split ratio of the compressed LNG stream) allow processing of LNG with varying compositions and heat contents while producing an "on spec" natural gas and/or LNG transportation fuel for the North American market or other emission sensitive markets. Moreover, contemplated configurations will produce high-purity ethane as commercial product or as energy source for the combined cycle power plant.

Still further, it should be particularly appreciated that contemplated configurations and processes employ LNG as a working fluid for power generation and stripping of LNG using expander discharge, and typically do not require a separate sales gas compressor driver (*e.g*., expander from the LNG expansion process is used to drive a sales gas compressor and to produce electric power). Moreover, the use of LNG for cooling the combustion air to increase conventional power generation cycle efficiency has heretofore not been recognized. With gas turbine combustion air cooling, the turbine output can be maintained at optimum levels even during hot summer months, as compared to conventional power plants that usually experience a drop in power output and suffer a loss in generation efficiency during these periods. With gas turbine combustion air cooling, the power plant is protected from the impacts from high ambient temperatures and the power output and efficiency can be maintained at the optimum levels throughout the year. This process is particularly suited and advantageous for installation in hot climate locations (*e.g*., Middle East). When LNG cold is utilized to cool the gas turbine combustion air, power output can be dramatically increased by as much as 20%. Typically, for every 1 °F drop in inlet air temperature, gas turbine power output can be increased by about 0.4%. This is because the cool air is denser, resulting a higher mass flow to the gas turbine, and hence a higher gas turbine output and efficiency. For a power plant that is site rated for 415 MW at 90°F ambient, the gas turbine output can be increased to 487 MW when the inlet air is chilled to 40°F.

### Examples

### Exemplary Calculation of Components in Selected Streams

In an exemplary configuration substantially identical with the plant configuration as shown in Figure 1, the mol fraction of various components of selected streams were calculated, and the results are listed in the table below. LPG is the C₃+ bottom fraction of the deethanizer, and the pipeline gas is the demethanizer overhead product.

| **Component** | **LNG Feed** | **Ethane** | **LPG** | **Pipeline Gas** |
|---|---|---|---|---|
| N2 | 0.0065 | 0.0000 | 0.0000 | 0.0073 |
| C1 | 0.8816 | 0.0176 | 0.0000 | 0.9878 |
| C2 | 0.0522 | 0.9723 | 0.0053 | 0.0042 |
| C3 | 0.0328 | 0.0092 | 0.5407 | 0.0006 |
| iC4 | 0.0071 | 0.0000 | 0.1206 | 0.0000 |
| NC4 | 0.0107 | 0.0000 | 0.1818 | 0.0000 |
| iC5 | 0.0040 | 0.0000 | 0.0673 | 0.0000 |
| NC5 | 0.0020 | 0.0000 | 0.0337 | 0.0000 |
| C6 + | 0.0030 | 0.0000 | 0.0505 | 0.0000 |
| Heat Value Btu/SCF (HHV) | 1,153 | 1,750 | 2,985 | 999 |
| MMscfd | 1,200 | 60 | 70 | 1,070 |
| Barrel per day | 519,900 | 37,700 | 51,200 | 431,000 |

### Exemplary Comparison to known Regasification Plant

For this comparison, a plant configuration of Figure 2 was employed to compare power balances and thermal efficiencies of the integrated LNG regasification facility to a conventional regasification plant with seawater heating and a separate (thermally not coupled) power plant. In the exemplary configuration according to the inventive subject matter, with the use of waste heat from the power plant for LNG regasification, a seawater heating system is not required. Typically 75000 GPM seawater system with a temperature drop of 20°F is required for vaporizing 1.2 BSCFD LNG, while with contemplated configurations, the seawater systems including the seawater intake and out-fall infrastructure can be eliminated. Such configurations also save about 5,200 kW power required by the seawater pumps. On the other hand, the power requirement by the LNG pumps is slightly higher at 8,500 kW compared to 8,200 kW due to the extra power consumed by the LNG power cycle pump 102. The net power production from the LNG expander cycle, after consumption by the residue gas compressor 103, is 11,600 kW. In summary, the non-thermally coupled conventional plant consumes 13,400 kW while the thermally coupled inventive process generates 3,100 kW.

The improvement in power generation in the power block is more significant when LNG cold is utilized for cooling in the combined cycle. The power cycle performances are based on two large commercial gas turbine drivers, for example, GE's Frame 7 power system. Cooling of the gas turbine combustion air, and lowering the steam turbine's back pressure, increases the power plant output from 415,000 kW to 487,000 kW. The net result is that power production is increased from 401,600 kW to 490,100 kW, a net gain of about 89,000 kW, with a corresponding increase in generation efficiency, from 7,027 Btu/kWh to 6,427 Btu/kWh. The results are summarized in the table below.

| | **NON-THERMALLY COUPLED PLANT** | **THERMALLY COUPLED PLANT** |
|---|---|---|
| **LNG Regasification:** | | |
| Seawater Flow rate, GPM | 75,000 | None |
| LNG Pumps, kW | 8,200 | 8,500 |
| Seawater Pumps, kW | 5,200 | None |
| Net Expander Output, kW | none | -11,600 |
| Net Power Consumption, kW | 13,400 | -3,100 |

| **Power Plant:** | | |
|---|---|---|
| Combustion Air Inlet, °F | 90 | 40 |
| Power Plant, kW | 415,000 | 487,000 |
| Fuel, MMBtu/h LHV | 2,820 | 3,150 |
| **Net Power Output, kW** | 401,600 | 490,100 |
| Power Generation Efficiency, Btu/kWh | 7,027 | 6,427 |

Consequently, as viewed from one perspective, the inventors contemplate a plant comprising a heat source that heats a first portion of a liquefied natural gas, and an expander in which the first portion of the heated liquefied natural gas is expanded to produce work. Particularly preferred plants will include a combined cycle power plant as a heat source, and at least a portion of the expanded liquefied gas is fed into a demethanizer to produce a lean gas and a demethanized bottom product. The lean gas may then be compressed using at least part of the work provided by the expander. It is further preferred that the demethanized bottom product is fed to a deethanizer that produces an ethane product and a liquefied petroleum gas product, and/or that the ethane product is employed as a fuel in the combined cycle power plant.

In another aspect, the inventors generally contemplate a plant comprising a liquid natural gas feed that is split in a first portion and a second portion, wherein the first portion is heated and expanded before entering a demethanizer, and wherein the second portion is used as reflux for the demethanizer. In such plant, it is typically preferred that the first portion is expanded in an expander to produce work, and/or that the demethanizer produces a lean gas that is compressed to a pipeline pressure using the work provided by the expander. In particularly preferred configurations, heating of the first portion is provided by a heat transfer fluid that receives heat from at least one of a gas turbine inlet air stream, surface condenser in a steam cycle, a heat recovery unit, and a flue gas stream.

Therefore, contemplated plants especially include those plants in which a regasification unit is operationally coupled to a combined cycle power unit, wherein liquefied natural gas is heated by heat provided from the combined cycle power unit, and wherein a processed liquefied natural gas produced from the heated liquefied natural gas is compressed using power produced by expansion of the heated liquefied natural gas.

Thus, specific embodiments and applications of liquefied natural gas regasification configuration and process have been disclosed. Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced.

## Claims

1. A LNG processing plant comprising:
- a heat source that is cooled by a refrigeration content of a first portion (3) of a liquefied natural gas stream (1) and thereby generates a heated first portion (8) of liquefied natural gas; and
- a regasification unit comprising:
- an expander (119) in which the heated first portion (8) of liquefied natural gas is expanded as a working fluid to produce electric power and an expander outlet stream (9);
**characterised by** the regasification unit further comprising:
- a demethanizer (104) to produce a lean gas (10) and a demethanized bottom product (12);
wherein at least a portion of the expander outlet stream (9) is fed into the demethanizer (104).

2. The plant of claim 1 wherein the heat source comprises a combined cycle power plant.

3. The plant of claim 2 wherein the regasification unit provides a combustion fuel to the combined cycle power plant, wherein the combustion fuel is prepared from the liquefied natural gas stream (1).

4. The plant of any of the preceding claims further comprising:
- a deethanizer (106) that produces an ethane product (15) and a liquefied petroleum gas product (18);
wherein the demethanized bottom product (12) is fed to the deethanizer (106).

5. The plant of claim 4 in dependency on claim 3 wherein the ethane product (15) is the combustion fuel.

6. The plant of claim 4 wherein the ethane product (15) is employed as a petrochemical plant feedstock.

7. The plant of any of the preceding claims further comprising:
- a residue gas compressor (103);
wherein at least part of the work provided by the expander (119) is used to drive the residue gas compressor (103) to thereby compress the lean gas (10).

8. The plant of claim 4 further comprising:
- a reflux condenser (108);
wherein reflux condenser duty of the deethanizer (106) is provided by the refrigeration content of the first portion (3) of liquefied natural gas before the heat source heats the first portion (3) of liquefied natural gas.

9. The plant of any of the preceding claims wherein a second portion of the liquefied natural gas (4) is separated in the demethanizer (104) into the lean gas (10) and the demethanized bottom product (12).

10. The plant of claim 9 wherein the second portion (4) and the first portion (3) have a ratio of between about 0.4 to 0.7.

11. A regasification unit, as defined in claim 1, adapted for use in a plant according to any of claims 2, 3 or 5.

12. A method of processing LNG in a LNG processing plant comprising:
- splitting a liquid natural gas feed (1) into a first portion (3) and a second portion (4);
- using a refrigeration content of the first portion (3) to cool a heat source in the plant and thereby generating a heated first portion (8);
- expanding the heated first portion (8) as a working fluid to produce electric power and an expander outlet stream (9);
- feeding the expander outlet stream (9) into a demethanizer (104); and
- using the second portion (4) as reflux for the demethanizer (104).

13. The method of claim 12 further comprising:
- compressing a lean gas (10) produced by the demethanizer (104) to a pipeline pressure using the work provided by expanding the heated first portion (8) .

14. The method of claim 12 further comprising:
- using the first portion (3) to provide reflux condenser duty for a deethanizer (106) before the first portion (3) is heated and expanded.

15. The method of claim 14 further comprising:
- the demethanizer (104) producing a bottom product (12);
- feeding the bottom product (12) to the deethanizer (106) ;
- the deethanizer (106) producing a liquefied petroleum gas product (18) and an ethane product (15).

16. The method of claim 15 wherein the ethane product (15) is combusted as a turbine fuel in a combined cycle power plant.

17. The method of claim 12 wherein heating of the first portion (3) is provided by a heat transfer fluid that receives heat from at least one of a gas turbine inlet air stream, a heat recovery unit, and a flue gas stream.

## Patentansprüche

1. Anlage zur Verarbeitung von Flüssigerdgas LNG umfassend:
- eine Wärmequelle die gekühlt ist durch einen Kühlinhalt eines ersten Teils (3) eines Flüssigerdgasstroms (1) und dabei einen erwärmten ersten Teil (8) von Flüssigerdgas erzeugt;
und
- eine Rückvergasungseinheit umfassend:
- einen Expander (119) in welchem der erwärmte erste Teil (8) des Flüssigerdgases als ein Arbeitsfluid expandiert wird um elektrische Energie und einen expandierten Auslassstrom (9) zu erzeugen; **dadurch gekennzeichnet, dass** die Rückvergasungseinheit weiter umfasst:
- einen Demethanisierer (104) zum Erzeugen eines Magergases (10) und eines demethanisierten Sumpfproduktes (12);
wobei zumindest ein Teil des expandierten Auslassstroms (9) in den Demethanisierer (104) gespeist ist.

2. Anlage gemäss Anspruch 1, wobei die Wärmequelle ein Kombikraftwerk umfasst.

3. Anlage gemäss Anspruch 2, wobei die Rückvergasungseinheit das Kombikraftwerk mit einem Verbrennungsbrennstoff versorgt, wobei der Verbrennungsbrennstoff vom Flüssigerdgasstrom (1) zubereitet ist.

4. Anlage gemäss einem der vorhergehenden Ansprüche weiter umfassend:
- einen Deethanisierer (106) der ein Ethanprodukt und ein flüssiges Propangasprodukt (18) erzeugt;
wobei das demethanisierte Sumpfprodukt (12) zum Deethanisierer (106) geleitet ist.

5. Anlage gemäss Anspruch 4 in Abhängigkeit von Anspruch 3, wobei das Ethanprodukt (15) ein Verbrennungsbrennstoff ist.

6. Anlage gemäss Anspruch 4, wobei das Ethanprodukt (15) verwendet wird als Ausgangsmaterial einer petrochemischen Anlage.

7. Anlage gemäss einem der vorhergehenden Ansprüche zudem umfassend.
- einen Restgaskompressor (103);
wobei zumindest ein Teil der durch den Expander (119) zur Verfügung gestellten Arbeit zum Antrieb des Restgaskompressors (103) verwendet wird um dadurch das Magergas (10) zu komprimieren.

8. Anlage gemäss Anspruch 4 weiter umfassend:
- einen Rückflusskondensator (108);
wobei die Rückflusskondensatorarbeit des Deethanisierers (106) durch den Kühlinhalt des ersten Teils (3) von Flüssigerdgas bereitgestellt wird, bevor die Wärmequelle den ersten Teil (3) des Flüssigerdgases erwärmt.

9. Anlage gemäss einem der vorhergehenden Ansprüche, wobei ein zweiter Teil des Flüssigerdgases (4) im Demethanisierer (104) in das Magergas (10) und das demethanisierte Sumpfprodukt (12) getrennt wird.

10. Anlage gemäss Anspruch 9 wobei der zweite Teil (4) und der erste Teil (3) ein Verhältnis von zwischen 0.4 bis 0.7 haben.

11. Rückvergasungseinheit wie in Anspruch 1 definiert, angepasst zur Verwendung in einer Anlage gemäss einem der Ansprüche 2, 3 oder 5.

12. Verfahren zur Verarbeitung von Flüssigerdgas LNG in einer Flüssiggasverarbeitungsanlage umfassend:
- Auftrennen einer Flüssigerdgaszufuhr (1) in einen ersten Teil (3) und einen zweiten Teil (4);
- Verwenden eines Kühlinhaltes des ersten Teils (3) zum Kühlen einer Wärmequelle in der Anlage und dabei Erzeugen eines erwärmten ersten Teils (8);
Entspannen des erwärmten ersten Teils (8) als ein Arbeitsfluid zum Erzeugen von elektrischer Energie und eines entspannten Ausgangsstroms (9);
Zuführen des entspannten Ausgangsstroms (9) in einen Demethanisierer (104); und
Verwenden des zweiten Teils (4) als Rückfluss für den Demethanisierer (104).

13. Verfahren gemäss Anspruch 12 weiter umfassend:
- Verdichten eines durch den Demethanisierer (104) erzeugten Magergases (10) auf einen Rohrleitungsdruck unter Verwendung von Arbeit welche durch Expandieren des erwärmten ersten Teils (8) zur Verfügung gestellt wird.

14. Verfahren gemäss Anspruch 12 weiter umfassend:
- Verwenden des ersten Teils (3) zum zur Verfügung stellen einer Rückflusskondenserlast für einen Deethanisierer (106) bevor der erste Teil (3) erwärmt und entspannt wird.

15. Verfahren gemäss Anspruch 14 weiter umfassend:
- der Demethanisierer (104) erzeugt ein Sumpfprodukt (12);
- Zuführen des Sumpfproduktes (12) zum Deethanisierer (106);
- der Deethanisierer (106) erzeugt ein flüssiges Propangasprodukt (18) und ein Ethanprodukt (15).

16. Verfahren gemäss Anspruch 15, wobei das Ethanprodukt (15) als ein Turbinenbrennstoff verbrannt wird in einer Kombikraftwerk.

17. Verfahren gemäss Anspruch 12, wobei das Erwärmen des ersten Teils (3) durch eine Wärmeübertragungsfluid bereitgestellt wird, welches Wärme von zumindest einem von einem Gasturbineneinlassluftstrom, einer Wärmerückgewinnungseinheit und einem Ablassgasstrom erhält.

## Revendications

1. Usine de traitement de gaz naturel liquéfié GNL, l'usine comprenant :
- une source de chaleur qui est refroidie par un contenu de réfrigération d'une première partie (3) d'un flux de gaz naturel liquéfié (1) et qui génère de cette manière une première partie chauffée (8) de gaz naturel liquéfié ; et
- une unité de regazéification comprenant :
- un dilatateur (119) dans lequel la première partie chauffée (8) de gaz naturel liquéfié est dilatée sous forme d'un fluide d'exploitation afin de produire une énergie électrique et un flux de sortie de dilatateur (9) ;
**caractérisée par le fait que** l'unité de regazéification comprend en outre :
- un déméthaniseur (104) pour générer un gaz pauvre (10) et un produit de fond déméthanisé (12) ;
où au moins une partie du flux de sortie de dilatateur (9) est délivrée au déméthaniseur (104).

2. Usine selon la revendication 1, dans laquelle la source de chaleur comprend une centrale électrique à cycle combiné.

3. Usine selon la revendication 2, dans laquelle l'unité de regazéification fournit un carburant de combustion à la centrale électrique à cycle combiné, où le carburant de combustion est préparé à partir du flux de gaz naturel liquéfié (1).

4. Usine selon l'une quelconque des revendications précédentes, comprenant en outre :
- un dé-éthaniseur (106) qui génère un produit d'éthane (15) et un produit de gaz de pétrole liquéfié (18) ;
dans laquelle le produit de fond déméthanisé (12) est délivré au dé-éthaniseur (106).

5. Usine selon la revendication 4, lorsqu'elle dépend de la revendication 3, dans laquelle le produit d'éthane (15) est le carburant de combustion.

6. Usine selon la revendication 4, dans laquelle le produit d'éthane (15) est employé comme matière première d'usine pétrochimique.

7. Usine selon l'une quelconque des revendications précédentes, comprenant en outre :
- un compresseur de gaz résiduaire (103) ;
dans laquelle au moins une partie de la tâche réalisée par le dilatateur (119) est utilisée pour entraîner le compresseur de gaz résiduaire (103) afin de compresser de cette manière le gaz pauvre (10).

8. Usine selon la revendication 4, comprenant en outre :
- un condenseur à reflux (108) ;
dans lequel le fonctionnement du condenseur à reflux du dé-éthaniseur (106) est fourni par le contenu de réfrigération de la première partie (3) de gaz naturel liquéfié avant que la source de chaleur ne chauffe la première partie (3) de gaz naturel liquéfié.

9. Usine selon l'une quelconque des revendications précédentes, dans laquelle une deuxième partie du gaz naturel liquéfié (4) est séparée dans le déméthaniseur (104) en le gaz pauvre (10) et le produit de fond déméthanisé (12).

10. Usine selon la revendication 9, dans laquelle la deuxième partie (4) et la première partie (3) ont un rapport allant environ de 0,4 à 0,7.

11. Unité de regazéification, selon la revendication 1, conçue pour une utilisation dans une usine selon l'une quelconque des revendications 2, 3 ou 5.

12. Procédé de traitement de gaz naturel liquéfié GNL dans une usine de traitement de gaz GNL, l'usine comprenant :
- la séparation d'une source de gaz naturel liquide (1) en une première partie (3) et en une deuxième partie (4) ;
- l'utilisation d'un contenu de réfrigération de la première partie (3) pour refroidir une source de chaleur dans l'usine et générer de cette manière une première partie chauffée (8) ;
- la dilatation de la première partie chauffée (8) sous forme d'un fluide d'exploitation afin de produire de l'énergie électrique et un flux de sortie de dilatateur (9) ;
- la délivrance du flux de sortie de dilatateur (9) à un déméthaniseur (104) ; et
- l'utilisation de la deuxième partie (4) sous forme d'un reflux destiné au déméthaniseur (104).

13. Procédé selon la revendication 12, comprenant en outre :
- la compression d'un gaz pauvre (10) généré par le déméthaniseur (104) à une pression de conduite par l'intermédiaire de la tâche réalisée par la dilatation de la première partie chauffée (8).

14. Procédé selon la revendication 12, comprenant en outre :
- l'utilisation de la première partie (3) pour permettre le fonctionnement d'un condenseur à reflux pour un dé-éthaniseur (106) avant que la première partie (3) ne soit chauffée et dilatée.

15. Procédé selon la revendication 14, comprenant en outre :
- le déméthaniseur (104) générant un produit de fond (12) ;
- la délivrance du produit de fond (12) au dé-éthaniseur (106) ;
- le dé-éthaniseur (106) générant un produit de gaz de pétrole liquéfié (18) et un produit d'éthane (15).

16. Procédé selon la revendication 15, dans lequel le produit d'éthane (15) est brûlé en tant que carburant de turbine dans une centrale électrique à cycle combiné.

17. Procédé selon la revendication 12, dans lequel le chauffage de la première partie (3) est fourni par un fluide de transfert de chaleur qui reçoit de la chaleur provenant d'au moins un élément parmi un flux d'air d'entrée de turbine à gaz, une unité de récupération de chaleur, et un flux de gaz de fumées.
